# EUROPEAN PATENT APPLICATION

(11) **EP 0 556 069 A1**
(43) Date of publication of application: **18.08.1993**
(21) Application number: 93301056.3
(22) Date of filing: 15.02.1993
(51) Int. Cl.: G02F 1/1335, G02B 3/00

(54) **Liquid crystal display and manufacturing method thereof**

(30) Priority: 14.02.1992 KR 922188
(71) Applicant: SAMSUNG ELECTRONICS CO. LTD., Suwon-city, Kyounggi-do (KR)
(72) Inventor: Lee, Hyung Seok, Kangnam-ku, Seoul (KR)
(74) Representative: Sturt, Clifford Mark

(57) **Abstract**

A liquid crystal display and manufacturing method thereof is disclosed, wherein a concave lens (44) which makes the strength and arriving time of light in the pixels uniform is formed at the opposite side of the glass substrate (30) where the colour filter layers (34, 36, 38) are formed, so that the LCD having high quality screen and high resolution can be realised.

## Description

The present invention relates to Liquid Crystal Displays (LCDs) and more particularly, to an LCD consisting of a glass substrate which has colour filter layers at one side thereof and a concave part at the other side thereof to be used as a concave lens, and its manufacturing method.

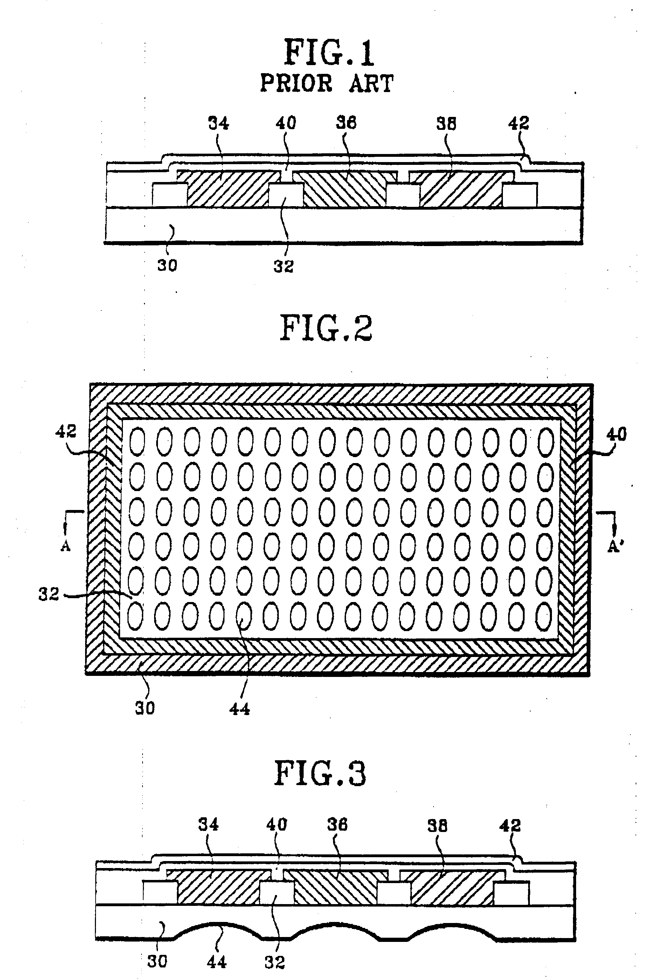

Recently, cathode ray tubes are replaced by LCDs in many systems such as laptop personal computers because they are easily portable due to small size and light weight and do not generate the electromagnetic waves which are harmful to the human body. The LCD consists of a lower substrate, a so-called thin film transistor (TFT) substrate, where TFT transistors are formed to be used as switching devices and a upper substrate, where three colour filter layers of red, green, and blue are arranged. The conventional technologies for manufacturing the upper substrate formed of the colour filters are disclosed in Nikei Micro Device (November 1991) and Korean patent number 91-18426 and are shown in figure 1.

As shown in figure 1, in order to prevent the degradation of TFT transistors, a black matrix 32 for shading the light is formed on a glass substrate 30 which is through cutting, annealing, and polishing processes. At this time, the black, matrix 32 is formed by depositing and patterning a Cr layer of 1000-2000Å in thickness. Next, a colouring acrylic photosensitive polymer having an optimal red spectrum is deposited over the entire structure with a thickness of 1.5-2.0µm and is soft-baked on a hot plate for 5 minutes. Subsequently, after exposing the polymer to UV light of i-line (436nm), a first colour filter layer 34 is formed by developing the polymer exposed to the UV light in a specified solution for 2-3 minutes. By the same method, a second colour filter layer 36 having an optimal green spectrum is formed on the glass substrate, overlapped with the black matrix 32 and separated from the first colour filter layer 34. And a third colour filter layer 38 having an optimal blue spectrum is formed on the glass substrate 30, overlapped with the black matrix 32 and separated from the second colour filter layer 36.

In order to protect the black matrix 30 and the colour filter layers 34, 36 and 38 from external damages, a protecting layer 40 is formed by coating a transparent polymer of 0.5-3µm in thickness such as polyimide, polyacrylate, and polyethylene which have a high hardness and a superior light transmissivity and baking it on a hot plate at 150-220°C for 5 minutes. Finally, the upper substrate is completed by forming an Indum thin oxide (ITO) transparent electrode layer 40 of 500-13000Å in thickness, to which a voltage is applied to drive the LCD, on the entire surface of the protecting layer 40. This upper substrate confronts the lower substrate (not shown in figure), ie. the TFT substrate where the switching TFTs are formed in a matrix form and the liquid crystal layer and the spacer are placed between the upper and lower substrates. But, most of the conventional LCDs have been formed with a large area. In the case of large-sized LCDs, the upper substrate where the colour filter layers are formed is easy to bend. If the upper substrate is bent, the back light or the external light that is incident to the bottom of the TFT substrate by polarisation and reflecting plates does not pass uniformly through pixels. Therefore, it is difficult to obtain high-quality LCD which is fine and clear.

The present invention is to provide an LCD which can achieve fine and clear screen of high quality by forming a concave lens in a glass substrate on colour filter layers and thereby uniformly transmitting the light to pixels at the same time.

According to the present invention, there is provided an LCD comprising: a glass substrate; a black matrix formed on the glass substrate; first, second and third colour filter layers formed in a mosaic shape, overlapped with a part of the black matrix; a protecting layer and a transparent electrode layer formed successively on the black matrix and colour filter layers; and a concave lens part formed at the opposite side of the glass substrate where the first, second and third colour filter layers are formed, confronting the first, second and third colour filters.

According to the present invention, there is also provided a method for manufacturing an LCD, comprising the following steps; forming black matrixes on a glass substrate and forming first, second and third colour filter layers between the black matrices; forming a protecting layer and a transparent electrode layer on the structure where the black matrices and colour filter layers were formed; and, forming a concave lens part at the opposite side of the glass substrate where the first, second and third colour filter layers are formed, confronting the first, second and third colour filters.

In the present invention having this construction, the strength and arriving time of the light in each pixel can be made uniform.

Embodiments of the invention will now be described by way of example only and with reference to the accompanying drawings, in which:-

Figure 1 is a cross-sectional view of a conventional upper substrate.

Figure 2 is a plane view of an upper substrate having a concave part in an LCD according to an embodiment of the present invention.

Figure 3 is a cross-section view of figure 2 along A-A' line.

Figures 4A to 4D are processing steps for manufacturing an LCD according to an embodiment of the present invention.

Figure 5 is a cross-sectional view of an LCD according to another embodiment of the present invention.

Figure 2 shows a plane view of an upper substrate with a concave lens part in the LCD according to an embodiment of the present invention and figure 3 shows a vertical cross-section of the upper substrate along A-A' line of figure 2.

As shown in figures 2 and 3, this embodiment is similar to a conventional LCD concerning the structure consisting of a black matrix on a glass substrate, colour filter layers, a protecting layer and an ITO transparent electrode layer and its manufacturing method. But this embodiment is much different from the conventional technology in that the concave lens is formed at the opposite side of the upper substrate where the colour filter layers were formed.

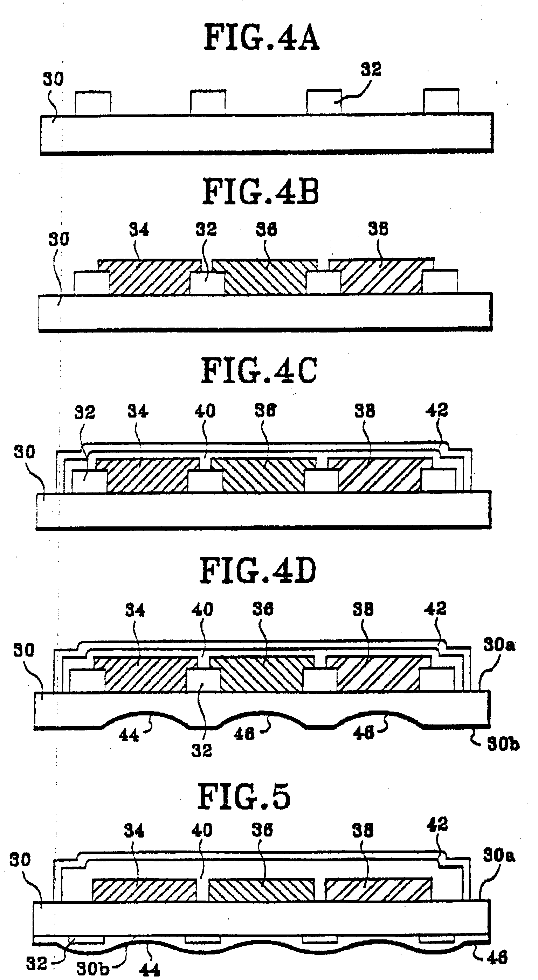

Now the method for manufacturing the LCD shown in figure 3 is described in detail with reference to figures 4A to 4D.

After depositing Cr on a glass substrate 30, a black matrix 32 with a width of 50µm is formed by wet-etching the Cr layer in a Cr etchant as shown in figure 4A.

Next, after coating a colouring acrylic photosensitive polymer containing red pigment is formed with a thickness of 1.5-2.0µm on the glass substrate where the black matrix 32 was formed and soft baking it on a hot plate for 5 minutes, it is exposed to the UV light of i-line and then developed in a developing solution for 2-3 minutes by a shower or horizontal dip method. Subsequently, by rinsing it with deionised water for 5-6 minutes, a first colour filter layer having an optimal red spectrum is formed as shown in figure 4B. As preferable colouring acrylic photosensitive polymers, there are CR-2000, CG-2000, CB-2000 made by Fuji-hunt Co. Ltd. Also, CD made by the same company is preferable as a developer. Similarly, a second colour filter layer 36 having an optimal green spectrum is formed overlapped with a part of the black matrix 30 but separated from the first colour filter layer 34. Also, a third colour filter layer 38 having an optimal blue spectrum is formed overlapped with a part of the black matrix but separated from the second colour filter layer 36 as shown in figure 4B.

Subsequently, a protecting layer 40 for protecting the black matrix and the colour filter layers is formed with a thickness of 0.5-2µm by coating polyimide, polyacrylate, or polyethylene which has a superior light transmissivity on the structure and baking it on the hot plate at 150-220°C for 5 minutes. Next, an ITO transparent electrode layer 42 for driving the liquid crystal is formed with a thickness of 5000Å on the entire surface of the protecting layer 40 as shown in figure 4C.

Finally, a concave lens part which is the most important technology of the present invention is formed. In the bottom side 30a of the glass substrate, the black matrix 32, the colour filter layers 34, 36 and 38, the protecting layer 40 and the transparent electrode layer 42 have already been formed by the methods described above. A concave lens part 44 is formed at the opposite side of the glass substrate, ie. the top side 30b. This is achieved by spin-coating of a photoresist on the top side 30b of the glass substrate 30, patterning of the photoresist on the positions corresponding to the colour filter layers 34, 36 and 38, and wet-etching of the exposed part of the glass substrate in a glass etchant as shown in figure 4D. At this time, the photoresist must have a sufficient etching-selectivity ratio against the glass substrate. Also, in order to enhance the focusing efficiency of the concave lens part 44, a material having a higher refractive index than the glass substrate can be formed.

Figure 5 shows a cross-sectional view of an LCD according to another embodiment of the present invention.

Different from the concave lens part in figure 4 that is directly formed by etching the glass substrate, the concave lens part in figure 5 is formed by forming the black matrix at a suitable position and depositing a transparent polymer on the top side 30b of the glass substrate 30 using the step difference of the black matrix 32. The structure is obviously shown in figure 5. In explaining a method for manufacturing this embodiment, the same numbering is used for the same parts and the detailed description is omitted.

As shown in figure 5, first, in the bottom side 30a of the glass substrate, the black matrix 32, the colour filter layers 34, 36 and 38, the protecting layer 40 and the transparent electrode layer 42 have already been formed by the methods described before. And the concave lens part 44 is formed at the top side 30b of the glass substrate 30. The forming procedure of the concave lens part is as follows. After depositing a Cr layer of 1000-2000Å in thickness on a glass substrate 30, a black matrix 32 with a width of 50µm is formed by forming the photoresist pattern and wet-etching the Cr layer in a Cr etchant. At this time, the black matrix partterns are formed at the position where the colour filter layers 34, 36, and 38 are connected to each other and the edge part of the most exterior colour filter layers 34 and 38. Next, in order to protect the black matrix formed on the top side 30b of the glass substrate 30 from external damages, the concave lens part 44 is formed at the positions corresponding to the colour filters 34, 36, and 38, by spin-coating polyimide, polyacrylate, or polyethylene which has a high hardness and a superior light transmissivity and reflowing it. At this time, the curvature of the concave lens can be controlled by the step difference of the black matrix 32, the thickness of the transparent polymer 46, the revolution speed of the coating machine, and the baking temperature.

As described hereinabove, the present invention can realise the LCD having high quality screen and high resolution by forming the concave lens part at the opposite side of the glass substrate where the colour filter layers are formed to make the strength and arriving time of light in the pixels uniform.

## Claims

1. An LCD comprising:
a glass substrate;
black matrices formed on said glass substrate;
first, second and third colour filter layers formed in a mosaic shape, overlapped with a part of said black matrices;
a protecting layer and a transparent electrode layer formed successively on said black matrix and colour filter layers; and
a concave lens part formed at the opposite side of said glass substrate where said first, second and third colour filter layers are formed, confronting said first, second and third colour filters.

2. The LCD according to claim 1, wherein a material which has a higher refractive index than glass substrate is inserted into the concave part of said concave lens.

3. A method for manufacturing an LCD, comprising the following steps:
forming black matrices on a glass substrate and forming first, second and third colour filter layers between said black matrices;
forming a protecting layer and a transparent electrode layer on the structure where said black matrices and colour filter layers were formed;
coating a photoresist, which has a sufficiently large etching-selectivity ratio against said glass substrate, at the opposite side of said glass substrate where said first, second and third colour filter layers are formed, and patterning said photoresist; and
forming a concave lens part by wet-etching of said glass substrate in a glass etchant using said photoresist pattern as a mask.

4. A method for manufacturing an LCD, comprising the following steps:
forming first, second and third colour filter layers on a glass substrate;
forming a protecting layer and a transparent electrode layer on the structure where said colour filter layers were formed;
forming a black matrix at the position where said colour filter layers are connected to each other and the edge part of the most exterior colour filter layers at the opposite side of said glass substrate; and
forming a concave lens with a predetermined curvature by coating a transparent polymer on the entire surface of the structure.

5. The method according to claim 4, wherein said transparent is one of polyimide, polyethylene, and polyacrylate.

6. The method according to claim 4, wherein the curvature of said concave lens is controlled by adjusting the step difference of said black matrix, the thickness of said transparent polymer, the revolution speed of a coating machine, and a baking temperature.
